# EUROPÄISCHE PATENTANMELDUNG

(11) **EP 4 711 184 A1**
(43) Veröffentlichungstag der Anmeldung: **18.03.2026**
(21) Anmeldenummer: 25197687.4
(22) Anmeldetag: 22.08.2025
(51) Int. Cl.: B60L 9/00, B60L 50/53, B60L 53/36

(54) **SCHIENENFAHRZEUG-POSITIONIERUNG**

(30) Priorität: 11.09.2024 DE 102024208653
(71) Anmelder: Siemens Mobility GmbH, 80997 München (DE)
(72) Erfinder: Probst, Sebastian, 90408 Nürnberg (DE)
(74) Vertreter: Siemens Patent Attorneys

(57) **Zusammenfassung**

Die vorliegende Erfindung betrifft ein Verfahren (100) zur Positionierung eines Schienenfahrzeugs (10) an einer Ladestation (2) sowie ein Schienenfahrzeug (10). Es wird eine Wirkung (W) eines stromführenden Bauteils (4) der Ladestation (2) auf ein Bauteil (18; 22) des Schienenfahrzeugs (10) sensorisch erfasst (S2). Daraufhin wird das Schienenfahrzeug (10) relativ zur Ladestation (2) auf Grundlage der erfassten Wirkung (W) lokalisiert (S3) und ausgehend von der zuvor erfolgten Lokalisierung um eine vorbestimmte Distanz (d) bewegt (S5).

## Beschreibung

Die vorliegende Erfindung betrifft ein Verfahren zur Positionierung eines Schienenfahrzeugs an einer Ladestation sowie ein Schienenfahrzeug.

Zum Befahren von nicht elektrifizierten Gleisen sind Batterie- oder batteriehybride Züge bekannt. Batteriehybride Züge können sowohl mittels Stromabnehmern unter einer Oberleitung fahren als auch im reinen Batteriebetrieb auf nicht elektrifizierten Streckenabschnitten. Dabei ist es gelegentlich notwendig, die Traktionsbatterien des entsprechenden Zugs wieder zu laden. Soll ein solches Aufladen in einem nicht elektrifizierten Streckenabschnitt erfolgen, zum Beispiel an einer Endhaltestelle ohne elektrifiziertes Gleis, können dedizierte Ladestationen vorgesehenen werden. Solche auch als "Ladeinseln" bezeichneten Ladestationen stellen üblicherweise ein Ladestromnetz über ein stromführendes Bauteil wie etwa eine Stromschiene, einen kurzen Oberleitungsabschnitt oder einen invertierten Stromabnehmer (englisch "inverse pantograph") bereit. Ein zu ladender Zug kann diese Ladestation infolgedessen anfahren und sich über einen Netzanschluss elektrisch mit dem Ladestromnetz verbinden, etwa indem einer seiner Stromabnehmer mit dem stromführenden Bauteil in Kontakt gebracht wird.

Dabei ist es wichtig, dass der zu ladende Zug präzise positioniert ist, damit der Kontakt zwischen dem Stromabnehmer und dem stromführenden Bauteil zuverlässig und abgesichert hergestellt werden kann. Anforderungen an die Zugpositionierung steigen infolgedessen mit abnehmender Länge des stromführenden Bauteils. Da eine satellitengestützte Positionierung üblicherweise zu ungenau ist, ist in der Regel zusätzliches Personal zum Einweisen des Zugs oder zusätzliche Infrastruktur, etwa im Gleis angebrachte Balisen zur Markierung der Ladeposition, notwendig.

Vor diesem Hintergrund ist es eine Aufgabe der vorliegenden Erfindung, die Positionierung eines Schienenfahrzeugs an einer Ladestation zu vereinfachen, insbesondere ohne Rückgriff auf zusätzliches Personal oder zusätzliche Infrastruktur zu ermöglichen.

Diese Aufgabe wird gelöst durch ein Verfahren zur Positionierung eines Schienenfahrzeugs an einer Ladestation gemäß den unabhängigen Ansprüchen.

Bevorzugte Ausführungsformen der Erfindung sind Gegenstand der abhängigen Ansprüche sowie der folgenden Beschreibung.

Gemäß einem ersten Aspekt der Erfindung wird bei dem, vorzugsweise zumindest teilweise computerimplementierten, Verfahren zur Positionierung eines Schienenfahrzeugs an einer Ladestation eine Wirkung eines stromführenden Bauteils der Ladestation auf ein Bauteil des Schienenfahrzeugs sensorisch erfasst. Daraufhin wird das Schienenfahrzeug relativ zur Ladestation auf Grundlage der erfassten Wirkung lokalisiert und ausgehend von der zuvor erfolgten Lokalisierung um eine vorbestimmte Distanz bewegt.

Eine Wirkung eines stromführenden Bauteils auf ein anderes Bauteil im Sinne der Erfindung vorzugsweise der Einfluss oder die Auswirkung eines elektrischen, magnetischen oder elektromagnetischen Feldes des einen Bauteils auf das entsprechend andere Bauteil. Die Wirkung ist also vorzugsweise elektrisch, magnetisch oder elektromagnetisch. Die Wirkung kann zum Beispiel eine Induktion einer Spannung in dem Bauteil oder eine Influenz von Ladungen in dem Bauteil umfassen.

Ein Aspekt der Erfindung beruht auf dem Ansatz, den Einfluss eines elektrischen, magnetischen oder elektromagnetischen Feldes einer Ladestation für ein Schienenfahrzeug an der Position des Schienenfahrzeugs zu erfassen und damit die Position des Schienenfahrzeugs relativ zur Ladestation zu ermitteln. Dazu wird zweckmäßigerweise ein elektrisches, magnetisches oder elektromagnetisches Feld von einem stromführenden Bauteil der Ladestation erzeugt. Das stromführende Bauteil, welches vorzugsweise zumindest einen Teil eines Ladestromnetzes bildet, kann beispielsweise eine Stromschiene, ein Oberleitungsabschnitt oder ein inverser Stromabnehmer sein. Ein komplementäres Bauteil, in dem der Einfluss des Felds auftritt und erfasst wird, ist zweckmäßigerweise dem Schienenfahrzeug zugeordnet. Das Bauteil des Schienenfahrzeugs kann beispielsweise ein Sensor oder ein auch als "Pantograph" bezeichneter Stromabnehmer sein.

Dabei kann davon ausgegangen werden, dass die Wirkung des stromführenden Bauteils auf das Bauteil des Schienenfahrzeugs mit abnehmendem Abstand zwischen dem Schienenfahrzeug und der Ladestation zunimmt. Infolgedessen kann die Stärke der Wirkung bereits charakteristisch für die Position des Schienenfahrzeugs relativ zur Ladestation sein. Darüber hinaus kann aber auch die Zunahme der Wirkung mit dem Abstand zwischen dem Schienenfahrzeug und der Ladestation variieren. Die Zunahme der Wirkung pro zurückgelegte Strecke des Schienenfahrzeugs in Richtung der Ladestation kann daher ebenfalls charakteristisch für den Abstand zwischen dem Schienenfahrzeug und der Ladestation sein.

Die Position des Schienenfahrzeugs relativ zur Ladestation kann durch die Erfassung der Wirkung des stromführenden Bauteils auf das Bauteil des Schienenfahrzeugs deutlich präziser bestimmt werden als zum Beispiel durch eine satellitengestützte Positionsbestimmung. Zudem kann diese Art der Positionsbestimmung infrastrukturunabhängig durchgeführt werden. Es sind insbesondere keine Balisen im Gleis zum Anzeigen einer bestimmten Position oder zusätzliches Personal zum Einweisen des Schienenfahrzeugs notwendig.

Nachdem das Schienenfahrzeug lokalisiert wurde, d. h. die Lage des Schienenfahrzeugs relativ zur Ladestation ermittelt wurde, wird das Schienenfahrzeug vorzugsweise in eine optimale, zum Beispiel abgesicherte, Ladeposition bewegt. Beispielsweise kann das Schienenfahrzeug vom Anfang einer Stromschiene, einem Oberleitungsabschnitt oder einem inversen Stromabnehmer aus weiter bewegt werden, bis ein Stromabnehmer des Schienenfahrzeugs im Wesentlichen zentral unter der Stromschiene, dem Oberleitungsabschnitt oder dem inversen Stromabnehmer positioniert ist. Der Stromabnehmer des Schienenfahrzeugs kann dann gefahrlos angehoben werden, um das Schienenfahrzeug zuverlässig elektrisch mit dem Ladestromnetz der Ladestation zu verbinden.

Nachfolgend werden bevorzugte Ausführungsformen der Erfindung und deren Weiterbildungen beschrieben. Diese Ausführungsformen sind, soweit dies nicht ausdrücklich ausgeschlossen wird, beliebig miteinander sowie mit den im Weiteren beschriebenen Aspekten der Erfindung kombinierbar.

In einer bevorzugten Ausführungsform wird die erfasste Wirkung zur Lokalisierung des Schienenfahrzeugs mit einem vorbestimmten Wirkprofil abgeglichen. Das vorbestimmte Wirkprofil ist vorzugsweise zuvor aufgenommen worden. Zweckmäßigerweise ist das vorbestimmte Wirkprofil spezifisch für die Ladestation. Das vorbestimmte Wirkprofil kann den erwarteten Verlauf der Wirkung in Abhängigkeit des Abstands des Schienenfahrzeugs oder zumindest des Sensors, mit dem die Wirkung erfasst wird, relativ zur Ladestation, insbesondere zum stromführenden Bauteil der Ladestation, darstellen. Durch den Abgleich der erfassten Wirkung mit dem vorbestimmten Wirkprofil lässt sich die Lokalisierung zuverlässig kalibrieren.

In einer weiteren bevorzugten Ausführungsform wird dem Schienenfahrzeug eine gegenwärtige Position zugeordnet, die gemäß dem vorbestimmten Wirkprofil der erfassten Wirkung entspricht. Anders gesagt wird aus dem vorbestimmten Wirkprofil die gegenwärtige Position des Schienenfahrzeugs abgeleitet, die mit der erfassten Wirkung korrespondiert. Dabei kann beispielsweise die Stärke der Wirkung berücksichtigt werden. Alternativ oder zusätzlich ist es aber auch möglich, die (Stärke der) Änderung der Wirkung pro in Richtung der Ladestation zurückgelegter Strecke zu berücksichtigen. Durch das Ableiten der gegenwärtigen Position aus dem Wirkprofil ist eine besonders präzise Lokalisierung des Schienenfahrzeugs möglich. Zum Beispiel kann die Position des Schienenfahrzeugs relativ zur Ladestation mit einer Präzision von mehr als 1 m ermittelt werden. Damit ist diese Art der Lokalisierung genauer als eine satellitengestützte Positionsbestimmung.

In einer weiteren bevorzugten Ausführungsform wird eine von der Ladestation induzierte Spannung in einem Netzanschluss des Schienenfahrzeugs, mittels dem das Schienenfahrzeug mit dem Ladestromnetz der Ladestation elektrisch verbunden ist, erfasst und der Lokalisierung des Schienenfahrzeugs relativ zur Ladestation zugrunde gelegt. Das Bauteil des Schienenfahrzeugs, in dem die Wirkung des stromführenden Bauteils der Ladestation erfasst wird, ist in diesem Fall also ein Netzanschluss des Schienenfahrzeugs, zum Beispiel ein Stromabnehmer. Dabei erfordert die Induktion der Spannung im Netzanschluss einen Wechselstrom bzw. eine Wechselspannung in dem stromführenden Bauteil der Ladestation. Infolgedessen ist in dieser Ausführungsform eine Lokalisierung des Schienenfahrzeugs möglich, wenn die Ladestation einen Wechselstrom bzw. eine Wechselspannung bereitstellt. Das dadurch emittierte elektromagnetische Feld kann zur Bestimmung des Abstands zwischen dem Schienenfahrzeug und der Ladestation herangezogen werden.

Alternativ kann aber auch der Fall vorliegen, dass die Ladestation einen Gleichstrom bzw. eine Gleichspannung bereitstellt. Dann wird kein elektromagnetisches Feld emittiert.

In einer weiteren bevorzugten Ausführungsform wird daher eine Feldstärke eines von dem stromführenden Bauteil der Ladestation erzeugten elektrischen Feldes erfasst und der Lokalisierung des Schienenfahrzeugs relativ zur Ladestation zugrunde gelegt. Das Bauteil des Schienenfahrzeugs, in welchem die Wirkung des elektrischen Felds erfasst wird, ist dabei vorzugsweise eine Elektrode eines Elektrofeldmeters, zum Beispiel eines Rotationsvoltmeters oder einer Feldmühle. Somit ist in dieser Ausführungsform eine Lokalisierung des Schienenfahrzeugs auch dann möglich, wenn die Ladestation einen Gleichstrom bzw. eine Gleichspannung bereitstellt. Das dadurch emittierte elektrische Feld kann zur Bestimmung des Abstands zwischen dem Schienenfahrzeug und der Ladestation herangezogen werden.

In einer weiteren bevorzugten Ausführungsform wird die induzierte Spannung bzw. die Feldstärke als Funktion einer vom Schienenfahrzeug zurückgelegten Wegstrecke erfasst. Dazu wird zweckmäßigerweise eine Wegstreckenmessung, etwa mittels einer auch als "Odometer" bezeichneten Wegstreckenerfassungsvorrichtung, unabhängig von der Erfassung der induzierten Spannung bzw. der Feldstärke durchgeführt. Die unabhängige Wegstreckenmessung kann dabei unreferenziert, d. h. (zunächst) unabhängig von einer Referenzposition sein. Effektiv kann so ein Wirkprofil aufgenommen werden, welches den (qualitativen) Zusammenhang zwischen der Stärke der Wirkung, d. h. der induzierten Spannung bzw. der Feldstärke, und dem abnehmenden Abstand des Schienenfahrzeugs und der Ladestation wiedergibt. Das aufgenommene (qualitative) Wirkprofil kann mit dem vorbestimmten (quantitativen) Wirkprofil abgeglichen werden und so eine absolute Lokalisierung erfolgen. Jeder gemessenen induzierten Spannung oder Feldstärke kann so zuverlässig ein absoluter Abstand zu Ladestation, insbesondere zum Anfang eines stromführenden Bauteils oder der optimalen Ladeposition, zugeordnet werden.

In einer weiteren bevorzugten Ausführungsform wird die Position des Schienenfahrzeugs relativ zur Ladestation modellbasiert ermittelt. Beispielsweise kann eine auch als "Fit" bezeichnete Ausgleichsrechnung durchgeführt werden, die von bei der Erfassung der Wirkung ermittelten Datenpunkten ausgeht. Die Lokalisierung erfolgt dann zweckmäßigerweise auf Grundlage der Ausgleichsrechnung. Vorzugsweise wird hierbei ein Kalman-Filter eingesetzt bzw. eine Kalman-Filterung durchgeführt. Die Ermittlung der Position des Schienenfahrzeugs relativ zur Ladestation beruht dann zweckmäßigerweise auf einer Änderung der erfassten Wirkung bei einer vorangegangenen Positionsänderung des Schienenfahrzeugs relativ zur Ladestation. Durch die modellbasierte Ermittlung der Schienenfahrzeug-Position können Ungenauigkeiten bei der Erfassung der Wirkung ausgeglichen bzw. deren Einfluss auf die Lokalisierung des Schienenfahrzeugs vermindert werden. Dies kann insbesondere von Vorteil sein bei einer Erfassung eines von dem stromführenden Bauteil emittierten elektrischen Felds, da solche Feldmessungen im allgemeinen unpräziser und störanfälliger sind als beispielsweise die Erfassung einer Induktionsspannung.

In einer weiteren bevorzugten Ausführungsform wird anhand der erfassten Wirkung geprüft, ob das Schienenfahrzeug eine vorbestimmte Position relativ zur Ladestation erreicht hat. Vorzugsweise wird das Schienenfahrzeug dann ausgehend von der vorbestimmten Position, d. h. von der vorbestimmten Position aus, um die vorbestimmte Distanz bewegt.

Durch das Erfassen der Wirkung kann zum Beispiel ein "Anfang" der Ladestation, insbesondere des stromführenden Bauteils wie etwa der Stromschiene, des Oberleitungsabschnitts oder des inversen Stromabnehmers, ermittelt bzw. überprüft werden, ob dieser Anfang erreicht wurde. Diese vorbestimmte Position kann zum Beispiel erreicht sein, wenn die erfasste Wirkung nach einem starken Anstieg auch bei einer Weiterbewegung des Schienenfahrzeugs auf die Ladestation zu nicht weiter zunimmt.

Ab der vorbestimmten Position, z. B. dem "Anfang" der Ladestation, kann das Schienenfahrzeug, etwa mittels einer Wegstreckenerfassungsvorrichtung, um die vorbestimmte Distanz bis in die optimale Ladeposition bewegt werden.

In einer weiteren bevorzugten Ausführungsform wird das Schienenfahrzeug vor dem Erfassen der Wirkung bis in einen Erfassungsbereich vor der Ladestation bewegt. Zweckmäßigerweise wird die Ladestation dort identifiziert. So kann beispielsweise das der Ladestation zugeordnete, "passende" Wirkprofil geladen werden, um die im Folgenden erfasste Wirkung damit abgleichen zu können. Die Bewegung bis in den Erfassungsbereich kann automatisch, zum Beispiel satellitengestützt, oder manuell durch einen Fahrzeugführer erfolgen. Der Erfassungsbereich liegt zweckmäßigerweise nahe genug einer Ladestation, dass die Wirkung des stromführenden Bauteils der Ladestation auf das Bauteil des Schienenfahrzeugs erfasst werden kann. Die Ladestation kann dann durch den Fahrzeugführer, zum Beispiel aus einer Liste mit mehreren möglichen Ladestationen, ausgewählt oder durch das Schienenfahrzeug automatisch erkannt werden. Dadurch, dass das Schienenfahrzeug in den Erfassungsbereich gebracht und die Ladestation dort identifiziert wird, kann das Schienenfahrzeug zuverlässig relativ zur Ladestation lokalisiert werden.

In einer weiteren bevorzugten Ausführungsform wird das Schienenfahrzeug zum Erfassen der Wirkung mit einer vorbestimmten Geschwindigkeit auf die Ladestation zubewegt. Diese Geschwindigkeit ist vorzugsweise klein, zum Beispiel unterhalb von 10 km/h, vorzugsweise unterhalb von 5 km/h. Das Schienenfahrzeug kann, zum Beispiel nachdem es in den Erfassungsbereich vor der Ladestation bewegt wurde, in einen "Annäherungsmodus" versetzt werden, in dem es sich mit der vorbestimmten Geschwindigkeit auf die Ladestation zubewegt. Durch die Bewegung mit der vorbestimmten, vorzugsweise geringen, Geschwindigkeit kann das Schienenfahrzeug beim Abfahren einer vorbestimmten Messstrecke die Wirkung zuverlässig erfassen. So können insbesondere Messfehler verhindert oder zumindest vermindert werden. Der Abgleich mit einem vorbestimmten Wirkprofil, d. h. die Kalibration der Lokalisierung, kann so vereinfacht und die Zuverlässigkeit signifikant erhöht werden.

Gemäß einem zweiten Aspekt der Erfindung weist das Schienenfahrzeug eine Batterie und einen Sensor zum Erfassen einer, insbesondere elektrischen Wirkung eines stromführenden Bauteils der Ladestation auf ein Bauteil des Schienenfahrzeugs auf. Zudem ist eine Datenverarbeitungsvorrichtung vorgesehen, die dazu eingerichtet ist, das Schienenfahrzeug relativ zur Ladestation auf Grundlage der erfassten Wirkung zu lokalisieren. Damit ist eine präzise Positionsbestimmung bzw. Positionierung des Schienenfahrzeugs in einer Ladestation möglich, ohne dass zusätzliche Infrastruktur oder Personal notwendig ist.

Vorzugsweise weist das Schienenfahrzeug zusätzlich eine auch als "Odometer" bezeichnete Wegstreckenerfassungsvorrichtung auf zum Ermitteln einer vom Schienenfahrzeug zurückgelegten Wegstrecke. Das Schienenfahrzeug kann so ausgehend von einer Referenzposition seine genaue Position ermitteln. Insbesondere kann das Schienenfahrzeug so gezielt und präzise, vorzugsweise ausgehend von der zuvor erfolgten Lokalisierung, um die vorbestimmte Distanz bewegt werden. Die Wegstreckenerfassungsvorrichtung ist zweckmäßigerweise als sogenannter "Meterzähler" ausgebildet.

Die Auswertungsvorrichtung kann zusätzlich dazu eingerichtet sein, die Bewegung des Schienenfahrzeugs um die vorbestimmte Distanz, insbesondere ausgehend von der zuvor erfolgten Lokalisierung, zu veranlassen. Das Schienenfahrzeug kann so automatisch in eine optimale Ladeposition bewegt werden. Alternativ kann die Bewegung des Schienenfahrzeugs um die vorbestimmte Distanz aber auch manuell durch ein Fahrzeugführer erfolgen. Zweckmäßigerweise wird der Fahrzeugführer dabei mittels einer Fahrzeugschnittstelle darüber informiert, wenn das Schienenfahrzeug eine vorbestimmte Position, zum Beispiel den Anfang der Ladestation, erreicht hat. Der Fahrzeugführer kann dann, gegebenenfalls mithilfe der Wegstreckenerfassungsvorrichtung, das Schienenfahrzeug gezielt um die vorbestimmte Distanz bewegen.

Eine Auswertungsvorrichtung im Sinne der vorliegenden Erfindung kann hard- und/oder softwaretechnisch ausgebildet sein. Die Auswertungsvorrichtung kann insbesondere eine, vorzugsweise mit einem Speicher- und/oder Bussystem daten- bzw. signalverbundene, Verarbeitungseinheit aufweisen. Beispielsweise kann die Auswertungsvorrichtung eine Mikroprozessoreinheit (CPU) oder ein Modul einer solchen und/oder ein oder mehrere Programme oder Programmmodule aufweisen. Die Auswertungsvorrichtung kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien, aufweisen. Das Programm kann derart beschaffen sein, dass es die hier beschriebenen Verfahren zumindest teilweise verkörpert bzw. auszuführen imstande ist, so dass die Auswertungsvorrichtung zumindest einen Teil der Schritte solcher Verfahren ausführen und damit insbesondere eine Position eines Schienenfahrzeugs relativ zu einer Ladestation bestimmen kann.

Die voranstehend beschriebenen Eigenschaften, Merkmale und Vorteile der Erfindung sowie die Art und Weise, wie diese erreicht werden, werden im Zusammenhang mit den Figuren in der folgenden Beschreibung von Ausführungsbeispielen der Erfindung näher erläutert. Soweit zweckdienlich, werden in den Figuren dieselben Bezugszeichen für dieselben oder einander entsprechende Elemente der Erfindung verwendet. Die Ausführungsbeispiele dienen der Erläuterung der Erfindung und beschränken die Erfindung nicht auf die darin angegebenen Kombinationen von Merkmalen, auch nicht in Bezug auf funktionale Merkmale. Zudem können alle in den Ausführungsbeispielen angegebenen Merkmale isoliert betrachtet und in geeigneter Weise mit den Merkmalen eines beliebigen Anspruchs kombiniert werden.

Es zeigen:
- FIG 1: ein Beispiel eines Schienenfahrzeugs;
- FIG 2: ein Beispiel eines Verfahrens zum Positionieren eines Schienenfahrzeugs an einer Ladestation; und
- FIG 3: ein Beispiel eines sensorisch erfassten Wirkprofils.

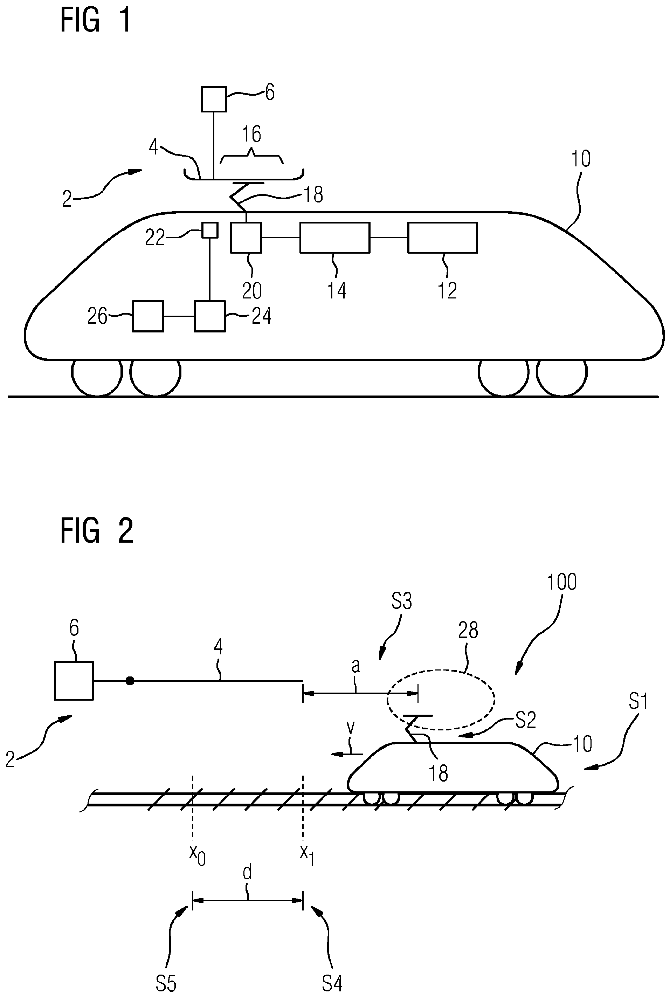

FIG 1 zeigt ein Beispiel eines Schienenfahrzeugs 10. Das Schienenfahrzeug 10 ist als batteriehybrides Schienenfahrzeug ausgebildet, welches seinen nicht dargestellten Antrieb sowohl mit elektrischer Energie aus einer ebenfalls nicht dargestellten Oberleitung als auch aus einer Batterie 12 versorgen kann. Um die Batterie 12 bei Bedarf laden zu können, ist diese über eine Wandleranordnung 14 mit einem Netzanschluss 16 elektrisch gekoppelt. Der Netzanschluss 16 dient zum elektrischen Verbinden des Schienenfahrzeugs 10 mit der Oberleitung oder einem Ladestromnetz einer Ladestation 2, insbesondere einem von einem Netztransformator 6 elektrisch versorgten stromführenden Bauteil 4 der Ladestation 2, etwa einer Stromschiene, einem Oberleitungsabschnitt oder einem inversen Stromabnehmer. Zu diesem Zweck umfasst der Netzanschluss 16 einen Stromabnehmer 18 sowie einen Zugtransformator 20, um die Netzspannung auf eine Zugspannung herunterzutransformieren. Mittels der Wandleranordnung 14 kann, auf Grundlage der Zugspannung, ein Ladestrom an der Batterie 12 bereitgestellt werden.

Zudem weist das Schienenfahrzeug 10 einen Sensor 22 zum Erfassen einer, insbesondere elektrischen, magnetischen oder elektromagnetischen, Wirkung des stromführenden Bauteils 4 der Ladestation 2 auf ein Bauteil des Schienenfahrzeugs 10 auf. Zudem weist das Schienenfahrzeug 10 eine Datenverarbeitungsvorrichtung 24 auf, die dazu eingerichtet ist, das Schienenfahrzeug 10 relativ zur Ladestation 2 auf Grundlage der erfassten Wirkung zu lokalisieren. Zudem ist eine Wegstreckenerfassungsvorrichtung 26 vorgesehen zum Ermitteln einer vom Schienenfahrzeug 10 zurückgelegten Wegstrecke.

Der Sensor 22 kann zum Beispiel dazu eingerichtet sein, eine vom stromführenden Bauteil 4 im Stromabnehmer 18 induzierte elektrische Spannung zu erfassen. Der Sensor 22 kann hierfür, anders als in FIG 1 gezeigt, auch Teil des Netzanschlusses 16, insbesondere Teil des Stromabnehmers 18 oder des Zugtransformators 20, sein. Eine Induktionsspannung kann im Stromabnehmer 18 induziert werden, wenn über das stromführende Bauteil 4 eine Wechselspannung bereitgestellt wird, der Stromabnehmer 18 das stromführende Bauteil 4 aber noch nicht kontaktiert. Mittels des Sensors 22 lässt sich vorzugsweise ein Anstieg der Induktionsspannung im Stromabnehmer 18 erfassen, während sich das Schienenfahrzeug 10 der Ladestation 2 annähert. Durch den Abgleich der erfassten Wirkung mit einem ladestationsspezifischen, vorbestimmten Wirkprofil kann die Datenverarbeitungsvorrichtung 24 das Schienenfahrzeug 10 relativ zur Ladestation 2 lokalisieren, d. h. dessen Relativposition bestimmen.

Alternativ kann der Sensor 22 auch zum Erfassen eines elektrischen Feldes bzw. der entsprechenden Feldstärke eingerichtet sein. Ein derartiges elektrisches Feld wird beispielsweise emittiert, wenn das Bauteil 4 Gleichstrom führt. Zum Erfassen des elektrischen Felds weist der Sensor 22 vorzugsweise eine Elektrode auf, auf der durch das elektrische Feld Ladungen influenziert werden können. Die Stärke der Influenz ermöglicht einen Rückschluss auf den Abstand des Sensors 22 zum stromführenden Bauteil 4.

Hat das Schienenfahrzeug 10 eine vorbestimmte Position relativ zur Ladestation 2 erreicht, zum Beispiel den Anfang des stromführenden Bauteils 4, kann die Datenverarbeitungsvorrichtung 24 - wie in FIG 2 gezeigt - eine weitere Bewegung des Schienenfahrzeugs 10 um eine vorbestimmte Distanz veranlassen. Die zurückgelegte Distanz kann dabei mittels des der Wegstreckenerfassungsvorrichtung 26 überwacht werden. Damit kann das Schienenfahrzeug 10 in die in FIG 1 dargestellte Ladeposition verbracht werden, in welcher der Netzanschluss 16, insbesondere der Stromabnehmer 18, sich zentral unter dem stromführenden Bauteil 4 befindet. Der Stromabnehmer 18 kann dann gefahrlos angehoben werden, um das Schienenfahrzeug 10 zuverlässig mit dem von der Ladestation 2 über das stromführende Bauteil 4 bereitgestellten Ladestromnetz elektrisch zu verbinden.

FIG 2 zeigt ein Verfahren 100 zur Positionierung eines Schienenfahrzeugs 10 an einer Ladestation 2.

In einem optionalen Verfahrensschritt S1 wird das Schienenfahrzeug 10 zunächst bis in einen Erfassungsbereich 28 vor der Ladestation 2 bewegt. Zweckmäßigerweise liegt dieser Erfassungsbereich 28 nahe genug an der Ladestation 2, um die Wirkung eines stromführenden Bauteils 4 der Ladestation 2, welches durch einen Netztransformator 6 der Ladestation 2 elektrisch versorgt wird, auf ein Bauteil 18 des Schienenfahrzeugs 10 erfassen zu können. Die Bewegung des Schienenfahrzeugs 10 bis in den Erfassungsbereich 28 hinein kann manuell durch einen Fahrzeugführer oder automatisch erfolgen. Die Annäherung an die Ladestation 2, d. h. das Bewegen bis in den Erfassungsbereich 28 erfolgt dabei zweckmäßigerweise satellitengestützt. Befindet sich das Schienenfahrzeug 10 in dem Erfassungsbereich 28, ist es auch möglich, die Ladestation 2 zu identifizieren. Zum Beispiel kann eine satellitengestützt ermittelte Position des Fahrzeugs 10 mit der bekannten Position der Ladestation 2 verglichen werden.

In einem weiteren Verfahrensschritt S2 wird die, insbesondere elektrische, magnetische oder elektromagnetische, Wirkung des stromführenden Bauteils 4 auf das Bauteil 18 des Schienenfahrzeugs 10 sensorisch erfasst. Im vorliegenden Beispiel ist das Bauteil 18 ein Stromabnehmer des Schienenfahrzeugs 10; es kann aber auch ein anderes Bauteil zum Erfassen der Wirkung des stromführenden Bauteils 4 vorgesehen sein, zum Beispiel eine dedizierte Sensorelektrode oder eine dedizierte Sensorleitung im oder am Schienenfahrzeug 10.

Zum Erfassen der Wirkung wird das Schienenfahrzeug 10 zweckmäßigerweise in einen Erfassungs- oder Annährungsmodus versetzt. In diesem Modus bewegt sich das Schienenfahrzeug 10 vorzugsweise mit einer geringen vorbestimmten Geschwindigkeit v, z. B. mit 10 km/h oder weniger, vorzugsweise mit 5 km/h oder weniger, auf die Ladestation 2 zu. Dabei kann die Wirkung auf das Bauteil 18 im Wesentlichen kontinuierlich gemessen werden. Dadurch lässt sich nicht nur die Wirkung in einem Abstand a zur Ladestation, sondern auch eine Änderung der Wirkung, insbesondere die Stärke bzw. der Verlauf dieser Änderung, bei der Annäherung an die Ladestation 2 ermitteln.

Um ein derartiges Wirkprofil, d. h. die Wirkung in Abhängigkeit der zurückgelegten Wegstrecke des Schienenfahrzeugs 10, aufzuzeichnen, ist es zweckmäßig, den beim Erfassen der Wirkung erzeugten Datenpunkten einen Positionswert zuzuordnen. Dies kann mittels einer Wegstreckenerfassungsvorrichtung (Bezugszeichen 26 in FIG 1) erfolgen.

In einem weiteren Verfahrensschritt S3 wird das Schienenfahrzeug 10 relativ zur Ladestation 2, insbesondere zum stromführenden Bauteil 4, auf Grundlage der erfassten Wirkung lokalisiert. Es wird also ermittelt, in welcher Position relativ zur Ladestation 2 sich das Schienenfahrzeug 10 gegenwärtig befindet. Beispielsweise kann der Abstand a zwischen dem Schienenfahrzeug 10 und der Ladestation 2, insbesondere zwischen dem Bauteil 18 des Schienenfahrzeugs 10 und dem stromführenden Bauteil 4 der Ladestation 2, ermittelt werden.

Zweckmäßigerweise wird die erfasste Wirkung dazu mit einem vorbestimmten, der Ladestation 2 zugeordneten Wirkprofil abgeglichen. Dieses vorbestimmte Wirkprofil kann die Stärke der Wirkung als Funktion des (absoluten) Abstands a charakterisieren, wie sie etwa zu einem früheren Zeitpunkt bei einer Kalibrationsmessung ermittelt wurde.

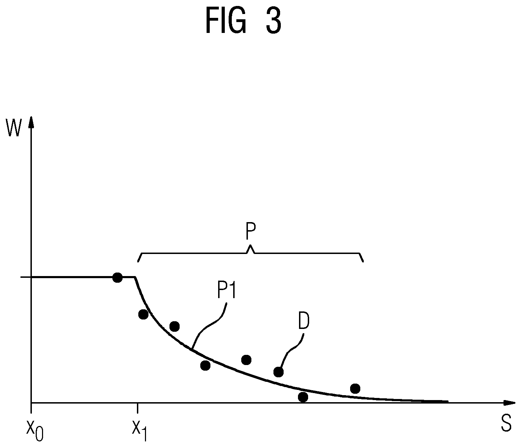

Zur noch präziseren Lokalisierung des Schienenfahrzeugs 10 kann auch das bei der Annäherung an die Ladestation 2 aufgezeichnete Wirkprofil mit dem vorbestimmten Wirkprofil abgeglichen werden, wie weiter unten im Zusammenhang mit FIG 3 noch ausführlicher beschrieben ist.

In einem weiteren, optionalen, Verfahrensschritt S4 wird ermittelt, ob oder wann das Schienenfahrzeug 10 eine vorbestimmte Position x1 relativ zur Ladestation 2 erreicht hat. Beispielsweise kann geprüft werden, ob das Schienenfahrzeug 10, insbesondere das Bauteil 18, den Anfang der Ladestation 2, insbesondere des stromführenden Bauteils 4, erreicht hat. Die vorbestimmte Position x1 kann beispielsweise erreicht sein, wenn keine weitere Änderung der Wirkung auf das Bauteil 18 erfasst wird, obwohl sich das Schienenfahrzeug 10 weiterbewegt. Dies kann ein Hinweis darauf sein, dass das Bauteil 18 sich bereits unter dem stromführenden Bauteil 4 befindet, sodass sich auch bei weiterer Bewegung des Schienenfahrzeugs 10 der Abstand zwischen dem stromführenden Bauteil 4 und dem Bauteil 18 des Schienenfahrzeugs 10 nicht mehr ändert.

In einem weiteren Verfahrensschritt S5 wird das Schienenfahrzeug 10 um eine vorbestimmte Distanz d ausgehend von der zuvor erfolgten Lokalisierung bewegt. So kann das Schienenfahrzeug 10 beispielsweise in eine optimale Ladeposition x0 bewegt werden.

In dem in FIG 2 dargestellten Beispiel entspricht die vorbestimmte Distanz d gerade dem Abstand zwischen der Ladeposition x0 und der vorbestimmten Position x1. Das sensorische Erfassen der Wirkung des stromführenden Bauteils 4 auf das Bauteil 18 des Schienenfahrzeugs 10 erlaubt eine Lokalisierung des Schienenfahrzeugs 10 zum Beispiel am Anfang der Ladestation 2, insbesondere des stromführenden Bauteils 4, d. h. an der vorbestimmten Position x1. Durch ein Weiterbewegen des Schienenfahrzeugs 10 um die vorbestimmte Distanz d kann so sichergestellt werden, dass sich der Stromabnehmer 18 des Schienenfahrzeugs 10 im Wesentlichen zentral unter dem stromführenden Bauteil 4 befindet und sich daher gefahrlos anheben lässt, um eine Batterie des Schienenfahrzeugs 10 laden zu können.

FIG 3 zeigt ein Beispiel eines sensorisch erfassten Wirkprofils P. Das Wirkprofil P setzt sich zusammen aus einzelnen Datenpunkten D, die beim Erfassen einer Wirkung W eines stromführenden Bauteils einer Ladestation auf ein Bauteil eines Schienenfahrzeugs ermittelt wurden. Die Wirkung W, etwa eine Induktionsspannung oder eine Feldstärke, ist dabei gegen eine vom Schienenfahrzeug zurückgelegten Strecke Wegstrecke S aufgetragen. Wie den Messungen der Wirkung W bzw. dem Wirkprofil P zu entnehmen ist, steigt die Wirkung W an, je stärker sich das Schienenfahrzeug einer vorbestimmten Position x1 relativ zur Ladestation nähert. Im vorliegenden Beispiel kennzeichnet die vorbestimmte Position x1, analog zum in FIG 2 gezeigten Beispiel, den Anfang der Ladestation bzw. des stromführenden Bauteils.

Ebenfalls in FIG 3 eingezeichnet ist ein der Ladestation zugeordnetes, vorbestimmtes Wirkprofil P1, das als durchgezogene Linie dargestellt ist. Die ermittelten Datenpunkte D sind, zum Beispiel aufgrund von Messungenauigkeiten, um das vorbestimmte wird Profil P1 herum verteilt.

Durch einen Abgleich der erfassten Wirkung W mit dem vorbestimmten Wirkprofil P1, insbesondere mit dem erfassten Wirkprofil P mit dem vorbestimmten Wirkprofil P1, kann das Schienenfahrzeug relativ zur Ladestation lokalisiert werden. Anders ausgerückt kann die Position des Schienenfahrzeugs relativ zur Ladestation, insbesondere zur vorbestimmten Position x1 und/oder einer optimalen Ladeposition x0, ermittelt werden. Mittels des vorbestimmten Wirkprofils P1 können die Messungen der Wirkung W effektiv in Bezug auf die Position relativ zur Ladestation kalibriert werden. Dazu ist es auch möglich, eine Ausgleichsrechnung ausgehend von den erfassten Wirkungen W, d. h. einen Fit an die Datenpunkte D, durchzuführen und das Ergebnis dieser Ausgleichsrechnung mit dem vorbestimmten Wirkprofil P1 abzugleichen. Die Lokalisierung des Schienenfahrzeugs relativ zur Ladestation kann entsprechend modellbasiert und somit besonders präzise erfolgen.

Obwohl die Erfindung im Detail durch die bevorzugten Ausführungsbeispiele näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffes sind Personen mit männlicher, weiblicher oder anderer Geschlechteridentität mit umfasst.

## Patentansprüche

1. Verfahren (100) zur Positionierung eines Schienenfahrzeugs (10) an einer Ladestation (2), aufweisend
- sensorisches Erfassen (S2) einer Wirkung (W) eines stromführenden Bauteils (4) einer Ladestation (2) auf ein Bauteil (22; 18) eines Schienenfahrzeugs (10),
- Lokalisieren (S3) des Schienenfahrzeugs (10) relativ zur Ladestation (2) auf Grundlage der erfassten Wirkung (W) und
- Bewegen (S5) des Schienenfahrzeugs (10) um eine vorbestimmte Distanz (d) ausgehend von der zuvor erfolgten Lokalisierung.

2. Verfahren (100) nach Anspruch 1, wobei die erfasste Wirkung (W) zur Lokalisierung des Schienenfahrzeugs (10) mit einem vorbestimmten Wirkprofil (P1) abgeglichen wird.

3. Verfahren (100) nach Anspruch 2, wobei dem Schienenfahrzeug (10) eine gegenwärtige Position zugeordnet wird, die gemäß dem vorbestimmten Wirkprofil (P1) der erfassten Wirkung (W) entspricht.

4. Verfahren (100) nach einem der vorangehenden Ansprüche, wobei eine von der Ladestation (2) induzierte Spannung in einem Netzanschluss (16) des Schienenfahrzeugs (10), mittels dem das Schienenfahrzeug (10) mit einem Ladestromnetz der Ladestation (2) elektrisch verbunden ist, erfasst und der Lokalisierung des Schienenfahrzeugs (10) relativ zur Ladestation (2) zugrunde gelegt wird.

5. Verfahren (100) nach einem der Ansprüche 1 bis 3, wobei eine Feldstärke eines von dem stromführenden Bauteil (4) der Ladestation (2) erzeugten elektrischen Felds erfasst und der Lokalisierung des Schienenfahrzeugs (10) relativ zur Ladestation (2) zugrunde gelegt wird.

6. Verfahren (100) nach Anspruch 4 oder 5, wobei die induzierte Spannung bzw. die Feldstärke als Funktion einer von dem Schienenfahrzeug (10) zurückgelegten Wegstrecke (S) erfasst wird.

7. Verfahren (100) nach einem der vorangehenden Ansprüche, wobei die Position des Schienenfahrzeugs (10) relativ zur Ladestation (2) modellbasiert ermittelt wird.

8. Verfahren (100) nach einem der vorangehenden Ansprüche, wobei anhand der erfassten Wirkung (W) geprüft wird (S4), ob das Schienenfahrzeug (10) eine vorbestimmte Position (x1) relativ zur Ladestation (2) erreicht hat, und das Schienenfahrzeug (10) ausgehend von der vorbestimmten Position (x1) um die vorbestimmte Distanz (d) bewegt wird.

9. Verfahren (100) nach einem der vorangehenden Ansprüche, wobei das Schienenfahrzeug (10) vor dem Erfassen der Wirkung (W) bis in einen Erfassungsbereich (28) vor der Ladestation (2) bewegt und die Ladestation (2) identifiziert wird (S1).

10. Verfahren (100) nach einem der vorangehenden Ansprüche, wobei das Schienenfahrzeug (10) zum Erfassen der Wirkung (W) mit einer vorbestimmten Geschwindigkeit (v) auf die Ladestation (2) zubewegt wird.

11. Schienenfahrzeug (10), aufweisend
- eine Batterie (12),
- einen Sensor (22) zum Erfassen einer Wirkung eines stromführenden Bauteils (4) einer Ladestation (2) auf ein Bauteil (18; 22) des Schienenfahrzeugs (10) und
- eine Datenverarbeitungsvorrichtung (24), die dazu eingerichtet ist, das Schienenfahrzeug (10) relativ zur Ladestation (2) auf Grundlage der erfassten Wirkung (W) zu lokalisieren.
